(19) Europäisches Patentamt

European Patent Office

Office européen des brevets

(11) EP 1 413 899 A2

(12) **EUROPÄISCHE PATENTANMELDUNG**

(43) Veröffentlichungstag:
28.04.2004 Patentblatt 2004/18

(51) Int Cl.⁷: **G01W 1/08**, G01P 5/00

(21) Anmeldenummer: 03023479.3

(22) Anmeldetag: **18.10.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **24.10.2002  DE 10249590**

(71) Anmelder: **Diehl Munitionssysteme GmbH & Co.
KG
90552 Röthenbach (DE)**

(72) Erfinder: **Schleicher, Ulrich, Dr.
91217 Hersbruck (DE)**

(74) Vertreter: **Diehl Patentabteilung
c/o Diehl Stiftung & Co. KG
Stephanstrasse 49
90478 Nürnberg (DE)**

(54) **Verfahren zur Bestimmung des Höhenprofiles der horizontalen Windgeschwindigkeit**

(57)     Es wird ein Verfahren zur Bestimmung des Höhenprofiles ($v_{WH}$ (h)) der horizontalen Windgeschwindigkeit ($v_{WH}$), nach Betrag und Richtung, über einem Zielgebiet (10) beschrieben, wobei über dem Zielgebiet (10) eine Meßeinrichtung (12) positioniert wird, aus der ein relativ schwerer Fallkörper (14) mit relativ kleinen Abmessungen ($D_K$), von dem ein leichtgewichtiges Fadenelement (16) einer bestimmten Längenabmessung ($L_F$) rückseitig weghängt, zum freien Fall ausgegeben wird. Mit der Meßeinrichtung (12) wird die der jeweiligen horizontalen Windgeschwindigkeit ($v_{WH}$) entsprechende seitliche Auslenkung (A) des vom Fallkörper (14) entfernten Endes (22) des Fadenelementes (16) gemessen und aus der seitlichen Auslenkung (A) die horizontale Windgeschwindigkeit ($v_{WH}$) bestimmt.

**Beschreibung**

Die Erfindung betrifft ein Verfahren zur Bestimmung des Höhenprofiles der horizontalen Windgeschwindigkeit gemäß dem Oberbegriff des Anspruches 1.

Für verschiedene Anwendungen ist es erforderlich, über einem bestimmten Zielgebiet die Wetterdaten wie beispielsweise die Temperatur und/oder die Feuchte sowie die Windgeschwindigkeit nach Betrag und Richtung als Funktion der Höhe über dem Zielgebiet zu bestimmen. Zur Temperatur- und Feuchtemessung gibt es geeignete Sensoren, die preisgünstig zur Verfügung stehen.

Der Erfindung liegt die Aufgabe zugrunde, ein einfach zu realisierendes Verfahren zu schaffen, mit dem die Windgeschwindigkeit bzw. ein Höhen-Windgeschwindigkeits-Profil nach Betrag und Richtung auf relativ einfache Weise bestimmt werden kann.

Diese Aufgabe wird erfindungsgemäß durch die Merkmale des Anspruches 1 gelöst. Weiterbildungen des erfindungsgemäßen Verfahrens sind in den Unteransprüchen gekennzeichnet.

Bei dem erfindungsgemäßen Verfahren wird über dem Zielgebiet eine Meßeinrichtung positioniert, aus der ein relativ schwerer Fallkörper mit relativ kleinen Abmessungen, von dem ein leichtgewichtiges Fadenelement einer bestimmten Längenabmessung rückseitig weghängt, zum freien Fall ausgegeben wird. Nach einer relativ kurzen Zeitspanne von größenordnungsmäßig 10 Sekunden fällt der Fallkörper dann luftreibungsbedingt mit konstanter Fallgeschwindigkeit, wobei das leichtgewichtige Fadenelement dem jeweiligen Seitenwind entsprechend ausgelenkt wird. Diese seitliche Auslenkung des leichtgewichtigen Fadenelementes wird mit der über dem Zielgebiet positionierten Meßeinrichtung gemessen. Aus der gemessenen seitlichen Auslenkung kann dann auf einfache Weise die horizontale Windgeschwindigkeit bestimmt werden.

Zur Positionierung der Meßeinrichtung über dem Zielgebiet ist die Meßeinrichtung vorzugsweise an einem Auftriebkörper vorgesehen. Bei diesem Auftriebkörper kann es sich um einen Ballon handeln.

Zur Messung der seitlichen Auslenkung des vom Fallkörper rückseitig weghängenden Fadenelementes kann die Meßeinrichtung eine Kamera aufweisen. Die Kamera kann mit einem Sender der Meßeinrichtung zusammengeschaltet sein. Der Sender dient dazu, die mit der Kamera detektierten, der jeweiligen seitlichen Auslenkung des Fadenelementes entsprechenden Daten zu einem Empfänger zu übertragen.

Bei dem erfindungsgemäßen Verfahren kommt zweckmäßigerweise ein Fadenelement mit einer Länge zur Anwendung, die wesentlich größer ist als die Abmessungen des Fallkörpers. Der Fallkörper ist vorzugsweise von einer kleinen Kugel aus Metall gebildet. Das Fadenelement kann von einem Wollfaden gebildet sein.

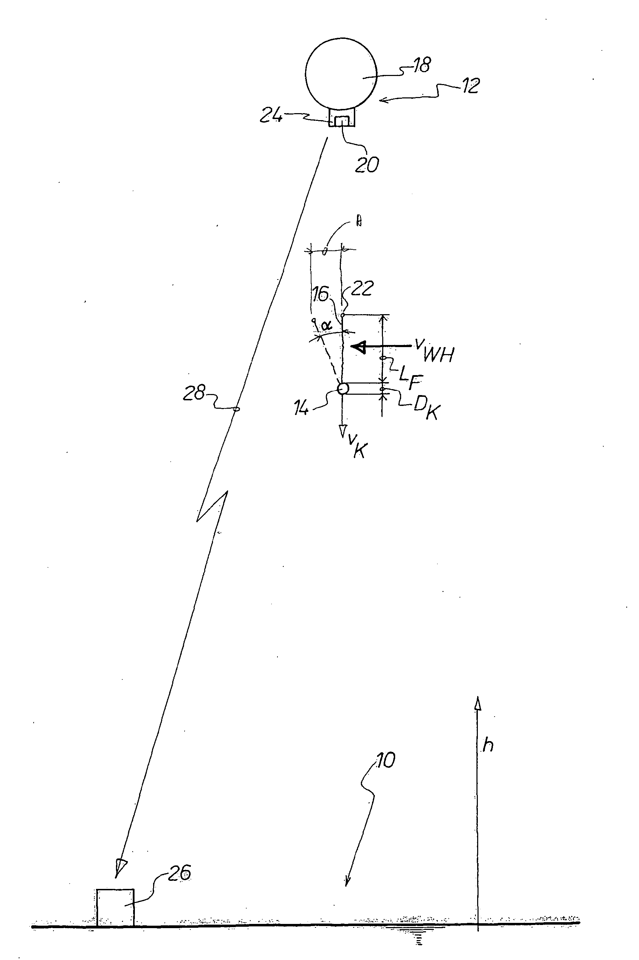

Weitere Einzelheiten ergeben sich aus der nachfolgenden Beschreibung des in der Zeichnung schematisch verdeutlichten erfindungsgemäßen Verfahrens zur Bestimmung des Höhenprofils der horizontalen Windgeschwindigkeit $v_{WH}$, nach Betrag und Richtung, über einem Zielgebiet.

Die Figur zeigt schematisch ein Zielgebiet 10 sowie eine über dem Zielgebiet 10 positionierte Meßeinrichtung 12. Nach der Positionierung der Meßeinrichtung 12 über dem Zielgebiet 10 wird aus der Meßeinrichtung 12 ein relativ schwerer, kleiner Fallkörper 14 zum freien Fall ausgegeben. Bei dem Fallkörper 14 handelt es sich um eine Metallkugel mit dem Durchmesser $D_K$. Vom Fallkörper 14 hängt rückseitig ein leichtgewichtiges Fadenelement 16 weg, das beispielsweise von einem Wollfaden gebildet ist. Das Fadenelement 16 weist die Längenabmessung $L_F$ auf.

Nach einer bestimmten, relativ kurzen Zeitspanne nach der Ausgabe des Fallkörpers 14 aus der Meßeinrichtung 12 besitzt der Fallkörper 14 luftreibungsbedingt eine konstante Sink- d.h. Fallgeschwindigkeit $v_K$.

Herrscht kein Seitenwind, so ist das Fadenelement 16 während des freien Falls des Fallkörpers 14 lotrecht nach oben orientiert. Herrscht hingegen ein Seitenwind $v_{WH}$, so wird das Fadenelement 16 um einen entsprechenden Winkel $\alpha$ seitlich ausgelenkt.

Die Meßeinrichtung 12 weist eine an einem Ballon 18 vorgesehene Kamera 20 auf. Mit Hilfe der Kamera 20 wird der Durchmesser $D_K$ der Metallkugel und die seitliche Auslenkung A des vom Fallkörper 14 entfernten Endes 22 des Fadenelementes 16 gemessen und das Verhältnis $n = \dfrac{A}{D_K}$ bestimmt. Dabei gilt:

$$\operatorname{tg} \alpha = \frac{v_{WH}}{v_K + v_{WV}}$$

mit $V_{WV}$ = vertikale Komponente der Windgeschwindigkeit
wobei $v_{WV} \ll v_K$.
Damit wird

$$\operatorname{tg} \alpha = \frac{v_{WH}}{v_K}$$

Es gilt außerdem:

$$\sin \alpha = \frac{A}{L_F}$$

Desweiteren gilt

$$\operatorname{tg} \alpha = \frac{\sin \alpha}{\sqrt{1-\sin^2\alpha}} = \frac{\dfrac{A}{L_F}}{\sqrt{1-\left(\dfrac{A}{L_F}\right)^2}}$$

Das heißt mit

$$\operatorname{tg} \alpha = \frac{v_{WH}}{v_K} = \frac{\dfrac{A}{L_F}}{\sqrt{1-\left(\dfrac{A}{L_F}\right)^2}}$$

ergibt sich

$$v_{WH} = \frac{v_K}{L_F} \cdot \frac{A}{\sqrt{1-\left(\dfrac{A}{L_F}\right)^2}}$$

Wie bereits weiter oben ausgeführt worden ist, wird mit der Kamera 20 das Verhältnis $n = \dfrac{A}{D_K}$ bestimmt. Damit ergibt sich A = n. $D_K$ und die horizontale Windgeschwindigkeit zu

$$v_{WK} = v_K \cdot \frac{n \cdot \dfrac{D_K}{L_F}}{\sqrt{1 - n^2 \cdot \left(\dfrac{D_K}{L_F}\right)^2}}$$

Nachdem die konstante Sinkgeschwindigkeit $v_K$ und die Länge $L_F$ des Fadenelementes 16 bekannt sind, kann aus der jeweils bestimmten Auslenkung A des distalen Endes 22 des Fadenelementes 16 die horizontale Windgeschwindigkeit $v_{WH}$, d.h. ihr Betrag, berechnet, d.h. bestimmt werden. Die Windrichtung ergibt sich aus der jeweiligen Auslenkrichtung des distalen Endes 22 des Fadenelementes 16.
Die mit der Kamera 20 während des freien Falls des Fallkörpers 14 aufgenommenen Auslenkungen A des distalen Endes 22 des Fadenelementes 16 und des Durchmessers $D_K$ der Metallklugel 14 werden mit Hilfe eines Senders 24 der Meßeinrichtung 12 zu einem Empfänger 26 übertragen, was durch den abgewinkelten Pfeil 28 angedeutet ist, und im Empfänger 26 ausgewertet. Damit ist ein Höhenprofil $v_{WH}$ (h), der horizontalen Windgeschwindigkeit über dem Zielgebiet 10, bestimmbar.

Bezugziffernliste:

10   Zielgebiet
12   Meßeinrichtung
14   Fallkörper
16   Fadenelement (an 14)
18   Auftriebkörper bzw. Ballon (von 12)
20   Kamera (von 12)
22   Ende (von 16)
24   Sender (an 12)
26   Empfänger
28   abgewinkelter Pfeil (zwischen 24 und 26

**Patentansprüche**

1.   Verfahren zur Bestimmung des Höhenprofiles ($v_{WH}$) (h)) der horizontalen Windgeschwindigkeit ($v_{WH}$), nach Betrag und Richtung, über einem Zielgebiet (10),
     **dadurch gekennzeichnet,**
     **daß** über dem Zielgebiet (10) eine Meßeinrichtung (12) positioniert wird, aus der ein relativ schwerere Fallkörper (14) mit relativ kleinen Abmessungen ($D_K$), von dem ein leichtgewichtiges Fadenelement (16) einer bestimmten Längenabmessung ($L_F$) rückseitig weghängt, zum freien Fall ausgegeben wird, wobei mit der Meßeinrichtung (12) die der jeweiligen horizontalen Windgeschwindigkeit entsprechende seitliche Auslenkung (A) des vom Fallkörper (14) entfernten Endes (22) des Fadenelementes (16) gemessen und aus der seitlichen Auslenkung (A) die horizontale Windgeschwindigkeit ($v_{WH}$) bestimmt wird.

2.   Verfahren nach Anspruch 1,
     **dadurch gekennzeichnet,**
     **daß** die Meßeinrichtung (12) mittels eines Auftriebkörpers (18) über dem Zielgebiet (10) positioniert wird.

3.   Verfahren nach Anspruch 1 oder 2,
     **dadurch gekennzeichnet,**
     **daß** die Meßeinrichtung (12) eine Kamera (20) aufweist, mittels der die jeweilige seitliche Auslenkung (A) des Fadenelementes (16) detektiert wird.

4.   Verfahren nach Anspruch 3,
     **dadurch gekennzeichnet,**
     **daß** die Meßeinrichtung (12) einen Sender (24) aufweist, mittels welchem die mit der Kamera (20) detektierte, jeweilige seitliche Auslenkung (A) des Fadenelementes (16) zu einem Empfänger (26) übertragen wird.

5.   Verfahren nach Anspruch 1,
     **dadurch gekennzeichnet,**
     **daß** ein Fadenelement (16) mit einer Länge ($L_F$) verwendet wird, die wesentlich größer ist als die Abmessungen ($D_K$) des Fallkörpers (14).

6.   Verfahren nach Anspruch 1 oder 2,
     **dadurch gekennzeichnet,**
     **daß** der Fallkörper (14) von einer Kugel gebildet ist.

7.   Verfahren nach Anspruch 1 oder 2,
     **dadurch gekennzeichnet,**

**daß** das Fadenelement (16) von einem Wollfaden gebildet ist.